Europäisches Patentamt

**European Patent Office**

**Office européen des brevets**

(19)

(11) Veröffentlichungsnummer: **0 263 806**
**A2**

(12) # EUROPÄISCHE PATENTANMELDUNG

(21) Anmeldenummer: **87890208.9**

(22) Anmeldetag: **09.09.87**

(51) Int. Cl.⁴: **F 02 B 37/12**

(30) Priorität: **08.10.86 AT 2679/86**

(43) Veröffentlichungstag der Anmeldung:
**13.04.88 Patentblatt 88/15**

(84) Benannte Vertragsstaaten: **DE FR GB IT SE**

(71) Anmelder: **AVL GESELLSCHAFT FÜR VERBRENNUNGSKRAFTMASCHINEN UND MESSTECHNIK MBH.PROF.DR.DR.H.C.HANS LIST**
**Kleiststrasse 48**
**A-8020 Graz (AT)**

(72) Erfinder: **Wachter, Wolfgang, Dr. Dipl.-Ing.**
**Laimburggasse 32**
**A-8010 Graz (AT)**

**Ospelt, Walter, Dr. Dipl.-Ing.**
**Untertal 412**
**A-8051 Graz (AT)**

(74) Vertreter: **Krause, Walter, Dr. Dipl.-Ing. et al**
**Postfach 200 Singerstrasse 8**
**A-1014 Wien (AT)**

(54) **Einrichtung zum Abblasen von verdichteter Ladeluft oder von Abgas bei Brennkraftmaschinen mit Abgasturbolader.**

(57) Gengenstand der Erfindung ist eine Einrichtung zum Abblasen von verdichteter Ladeluft oder von Abgas bei Brennkraftmaschinen mit Abgasturbolader, welche aus mehreren, vorzugsweise zwei, Auf-/Zu-Abblaseventilen (V1, V2) besteht, denen je eine Drosselstelle mit unveränderlichem Querschnitt (A1, A2) nachgeschaltet ist, die zur Erzielung unterschiedlicher Abblasemassen einzeln ansteuerbar sind.

Dadurch können anstelle der bekannten getakteten Magnetventile einfache Magnetventile zur Schaltung verwendet werden. Es wird so einerseits die Störanfälligkeit herabgesetzt, anderseits die Genauigkeit der gewünschten Abblasequantität verbessert. Die abblasemenge kann sehr gut den Erfordernissen der Brennkraftmaschine, abhängig vom Betriebszustand (Drehzahl, Einspritzmenge, Fahrhebelstellung) angepaßt werden.

Fig. 1

EP 0 263 806 A2

**Beschreibung**

Einrichtung zum Abblasen von verdichteter Ladeluft oder von Abgas bei Brennkraftmaschinen mit Abgasturbolader

Die Erfindung bezieht sich auf eine Einrichtung zum Abblasen von verdichteter Ladeluft oder von Abgas bei Brennkraft-maschinen mit Abgasturbolader.

Brennkraftmaschinen mit Abgasturbolader haben gegenüber Saugmotoren unter anderem den Nachteil, bei Beschleunigungsvorgängen mit einem langsameren Ansprechverhalten zu reagieren als Motoren ohne Abgasturbolader. Dieser Nachteil kann zum Teil durch Verwendung kleinerer Turbineneinheiten kompensiert werde. Allerdings müssen dann im Bereich hoher Ladedrücke Maßnahmen zur Ladedruckbegrenzung getroffen werden, um Schäden durch zu hohen Spitzendruck an der Brennkraftmaschine und durch zu hohe Drehzalen am Turbolader zu verhindern.

Versuche im Zusammenhang mit der vorliegenden Erfindung haben ergeben, daß Ladedruckreduktionen in bestimmten Kennfeldpunkten zur Reduktion der Emissionen führen. Das setzt eine exakte Einstellbarkeit der Ladedrücke voraus.

Eine bekannte Möglichkeit zur Ladedruckreduktion besteht in der Abblasung von verdichteter Ladeluft oder von Agbas vor dem Turbineneintritt. Die Quantität der abzublasenden Gas masse hängt dabei vom Betriebszustand der Brennkraftmaschine ab und bei der herkömmlichen Steuerung der Abblasung mittels eines Ventils vom Ventilhub, der seinerseits den jeweiligen Durchflußquerschnitt bestimmt.

Es ist bekannt, als Abblaseventile getaktete Magnetventile zu verwenden, die einen relativ grossen Bauaufwand erfordern, störanfällig sind und die in den verschiedenen Kennfeldpunkten die gewünschten Abblasquantititäten nur ungenau einstellen können.Solche Ventile haben neben der Steuerung der Durchflußmenge auch die Dichtfunktion zu übernehmen. Kommt es zu einer Deformation der Dichtflächen, wird auch in Betriebspunkten abgeblasen, wo dies nicht erwünscht ist. Dadurch werden sowohl das Betriebsverhalten der Brennkraftmaschine als auch die Schadstoffemissionen ungünstig beeinflußt.

Aus der CH-PS 638 869 ist die Abblasung von verdichteter Ladeluft bei einer Brennkraftmaschine mit Abgasturbolader mit ladeluftseitigem Resonanzsystem bekannt. Die abgeblasene Ladeluft wird dabei der Abgasleitung in Strömungsrichtung vor der Turbine zugeführt. Das setzt ein positives Druckgefälle zwischen der Ladeluftseite und der Abgasseite stromaufwärts der Turbine voraus, d.h. es kann nur unter dieser Bedingung abgeblasen werden. Ein solches positives Druckgefälle herrscht aber nur in einem eingeschränkten Teil des Motor-Betriebskennfeldes. Außerdem ist es nachteilig, daß in der Bypass-Leitung ein übliches Regelventil, sowie ein Rückschlagventil verwendet werden, welche die oben beschriebenen Probleme mit sich bringen können.

Die DE-OS 29 13 488 and die DE-OS 30 48 933 haben Einrichtungen zum Gegenstand, welche die Abblasung von Gasen bei einer Brennkraftmaschine mit Abgasaufladung über einen Bypass für die Turbine mittels eines Regelventils zur Mengensteuerung durchführen. Nachteilig hiebei ist, daß man in den verschiedenen Kennfeldpunkten die gewünschten Abblasequantitäten nur ungenau einstellen kann. Dadurch werden, wie bereits oben erwähnt, sowohl das Betriebsverhalten der Brennkraftmaschine als auch die Schadstoffemissionen ungünstig beeinflußt.

Die Erfindung hat sich zur Aufgabe gestellt, diese Nachteile zu vermeiden und die Abblasung von verdichteter Ladeluft oder von Abgas in bezug auf die Quantitäten zu verbessern und damit für den jeweiligen Motor-Betriebspunkt günstigere Verbrennungsluftverhältnisse zu schaffen und dadurch ein besseres Betriebsverhalten und eine Senkung der Emissionen (NOx, HC, Particulates) zu erreichen.

Die Erfindung besteht darin, daß die Einrichtung der eingangs genannten Art aus mehreren, vorzugsweise zwei, Auf-/Zu-Abblaseventilen besteht, denen je eine Drosselstelle mit unveränderlichem Querschnitt nachgeschaltet ist, die zur Erzielung unterschiedlicher Abblasemassen einzeln ansteuerbar sind. Dadurch können anstelle der getakteten Magnetventile einfache Magnetventile zur Schaltung verwendet werden.Auf-/Zu-Ventile sind konstruktiv einfacher und besser den hier gestellten Anforderungen nach Dichtheit anzupassen und lassen somit eine längere Lebensdauer als weggesteuerte Ventile erwarten. Darüber hinaus wird durch die hier vorgestellte Lösung die Störanfälligkeit herabgesetzt und insbesondere die Genauigkeit der gewünschten Abblasequantität verbessert. Die Abblasemenge kann somit sehr gut den Erfordernissen der Brennkraftmaschine, abhängig von Betriebszustand (Drehzahl, Einspritzmenge, Fahrhebelstellung) angepaßt werden.

Die Senkung der Emissionen (NOx, HC, Particulates) durch die erfindungsgemäße Einrichtung wird erreicht durch die Erzeugung des für den jeweiligen Motor-Betriebspunkt gunstigsten Verbrennungsluftverhältnisses und durch die Reduktion des Gas-Massenstroms durch die Brennkraftmaschine, wo dies vorteilhaft ist. So ist einerseits bei niedrigen Lasten ein hoher Ladedruck vorteilhaft, der eine höhere Verdichtungstemperatur bewirkt, weil dadurch die Zündbedingungen des Kraftstoffes verbessert werden.Das hat niedrigere HC- und Particulates-Emissionen zur Folge. Anderseits gibt es Betriebspunkte, wo eine Reduktion des Massenstromes durch die Brennkraftmaschine erwünscht ist. Durch diese Maßnahme wird bei vorgegebener Schadstoffkonzentration im Abgas (z.B. Rußkonzentration) die Massenemission (z.B. Particulates-Emission) gesenkt, da sich letztere zus dem Produkt aus Schadstoffkonzentration und Massenstrom ergibt.

Diesem Effekt überlagert sich die Verringerung der Konzentration der Kohlenwasserstoff-Komponenten im Abgas, weil diese, bedingt durch das hohe Temperaturniveau des Verbrennungsprozesses bei niedrigem Luftverhältnis, besser oxidieren.

Es ist besonders vorteilhaft, wenn der von der Ladeluftleitung an der Druckseite des Turbogebläses oder von der Abgasleitung an der Eintrittseite der Abgasturbine abgeleitete, durch die Ventile gesteuerte Abblasestrom in das austrittsseitige Abgasrohr der Abgasturbine mündet.

In weiterer Ausgestaltung der Erfindung ist vorgesehen, daß zwei Auf-/Zu-Abblaseventile parallel geschaltet sind und in einer Umgehungsleitung zu diesen zwei Auf-/Zu-Abblaseventilen ein drittes Auf-/Zu-Abblaseventil angeordnet ist, dem ebenfalls eine Drosselstelle mit unveränderlichem Querschnitt nachgeschaltet ist. Durch unterschiedliches Ansteuern dieser insgesamt drei Auf-/Zu-Abblaseventile kann den Erfordernissen der Brennkraftmaschine besser entsprochen werden, weil eine größere Anzahl von Betriebspunkten erfaßt werden kann bzw. weil eine größere Variation der Abblasemassen möglich ist.

Einen weiteren Vorteil in dieser Richtung erhält man, wenn in weiterer Ausgestaltung der Erfindung zumindest die den parallel geschalteten Abblaseventilen nachgeschalteten Drosselstellen unterschiedliche Drosselquerschnitte aufweisen.

Es erweist sich als besonders vorteilhaft, wenn die Summe der unveränderlichen steuernden Querschnittsflächen der Drosselstellen kleiner ist als die Hälfte der gesamten lichten Querschnittsfläche des Hauptabgasrohres stromaufwärts der Turbine.

Nach einem weiteren Merkmal der Erfindung kann die abgeblasene Gasmasse in das Hauptabgasrohr stromabwärts der Turbine über dort am Umfang des Hauptabgasrohres vorgesehene eine oder verteilt mehrere Eintrittsöffnungen rückgeführt werden, die massensteuernde Funktion haben können. Dadurch werden die Abströmbedingungen von der Turbine nicht gestört.

Es kann einen baulichen Vorteil bieten, wenn zur Rückführung der abgeblasenen Gasmasse in das Hauptabgasrohr Einsatzrohre mit je einem Auf-/Zu-Abblaseventil und nachgeschalteter Drosselstelle unveränderlichen Querschnittes vorgesehen sind, die in das Hauptabgasrohr stromabwärts der Turbine eingesetzt sind. Dabei können die Einsatzrohre radial in das Hauptabgasrohr eingesetzt und innerhalb des Hauptabgasrohres gekrümmt sein und parallel zur Hauptströmungsrichtung münden.

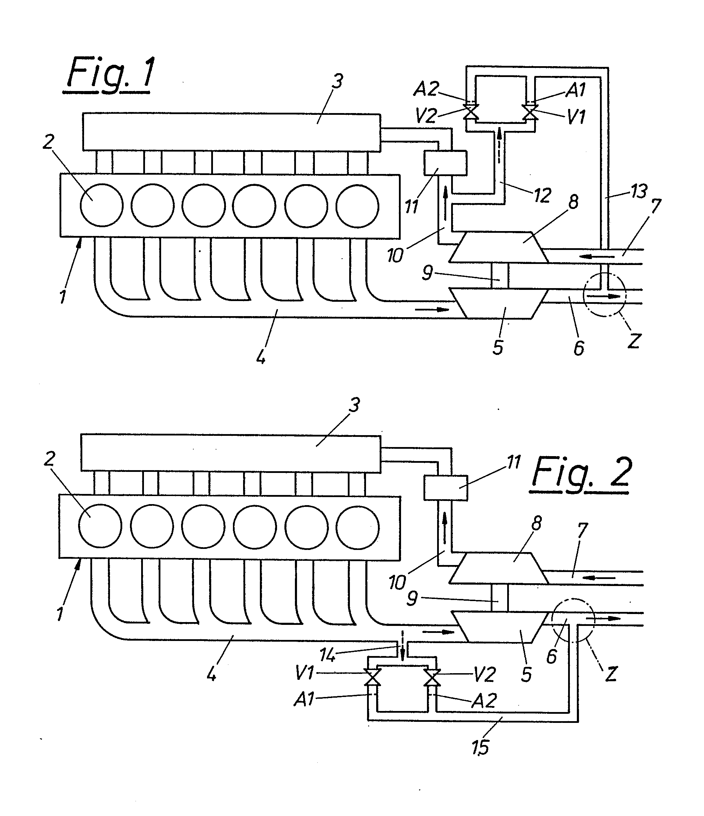

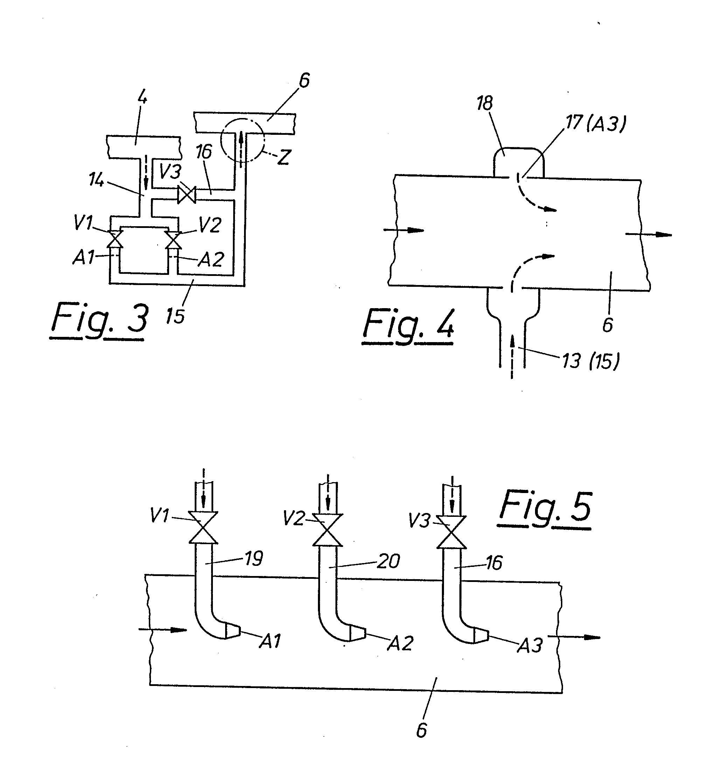

Die Erfindung wird nachfolgend anhand der Zeichnungen an einigen Ausführungsbeispielen näher erläutert. Es zeigen in schematischer Darstellung Fig. 1 eine erste Ausführung gemäß der Erfindung, Fig. 2 eine zweite Ausführung gemäß der Erfindung, Fig. 3 eine Variante zur Ausführung gemäß Fig. 2, Fig. 4 und 5 die Einzelheit Z zu Fig. 1 bis 3 in vergrößerter Darstellung und für zwei verschiedene Ausführungsformen. Gleiche Teile sind mit den selben Bezugszeichen versehen.

In den Fig. 1 und 2 ist eine Brennkraftmaschine 1 schematisch dargestellt, welche sechs in Reihe angeordnete Zylinder 2 aufweist. An einer Längsseite der Brennkraftmaschine befindet sich die Ladeluftleitung 3 und an der gegenüberliegenden Längsseite die Abgassammelleitung 4. Letztere führt zur Abgasturbine 5; das Abgas verläßt diese über das Hauptabgasrohr 6. Die Ansaugluft strömt über das Ansaugrohr 7 zum Turbogebläse 8, welches mit der Abgasturbine 5 über die Welle 9 gekuppelt ist. Die verdichtete Ladeluft wird über eine Verbindungsleitung 10 der Ladeluftleitung 3 zugeführt, wobei allenfalls in dieser ein Ladeluftkühler 11 angeordnet sein kann.

Die bei der Ausführung nach Fig. 1 abzublasende verdichtete Ladeluft wird über die Zweigleitung 12 der Verbindungsleitung 10 entnommen und über die beiden parallelgeschalteten Auf-/Zu-Abblaseventile V1 and V2 über die gemeinsame Ableitung 13 dem Hauptabgasrohr 6 im Bereich Z zugeführt. Im Detail ist dieser Bereich Z in zwei Ausführungsvarianten in Fig. 4 und 5 dargestellt. In Strömungsrichtung hinter den beiden Auf-/Zu-Abblaseventilen V1 und V2 ist je eine Drosselstelle A1 bzw.A2 mit unveränderlichem Querschnitt nachgeschaltet. Die Querschnitte der beiden Drosselstellen A1 und A2 können gleich oder verschieden groß sein. Der Querschnitt A3 im Bereich Z kann ebenfalls massensteuernde Funktion haben

Bei der Ausführung nach Fig 2 wird Abgas aus der Abgassammelleitung 4 abgeblasen, zu welchem Zweck zwei ebenfalls parallel geschaltete Auf-/Zu-Abblaseventile V1 und V2 einerseits über einem Rohrstutzen 14 mit der Abgassammelleitung 4 und anderseits über eine Verbindungsleitung 15 mit dem Hauptabgasrohr 6 in Strömungsverbindung stehen. In Strömungsrichtung hinter den Auf/Zu-Abblaseventilen V1 und V2 sind wiederum Drosselstellen A1 bzw. A2 mit unveränderlichen Querschnitten angeordnet. Die beiden Abblaseventile V1 und V2 können als Magnetventile ausgeführt sein, die d.h. jedes für sich oder gemeinsam angesteuert werden können.

Eine Ausführungsvariante der in Fig. 2 dargestellten Einrichtung ist in Fig. 3 dargestellt. Hier ist zusätzlich zwischen dem Rohrstutzen 14 und der Verbindungsleitung 15 eine Verbindungsleitung 16 vorgesehen, die mittels des Ventils V3 steuerbar ist. Dieses Ventil V3 kann ebenfalls als Auf-/Zu-Abblaseventil ausgebildet sein, welches allein oder in Komination mit den Ventilen V1 und V2 angesteuert werden kann. In vorliegendem Fall mündet die Verbindungsleitung 16 in die Verbindungsleitung 15 ein, sodaß die gesamte Abblasemasse gemeinsam dem Hauptabgasrohr 6 zugeführt wird. Es ist jedoch auch möglich, die Verbindungsleitung 16 separat in das Hauptabgasrohr einmünden zu lassen.

In den Fig.4 und 5 sind zwei Ausführungsformen des in den Fig. 1 bis 3 angedeuteten Mündungsbereiches Z der Rückführleitungen dargestellt. Bei der Ausführung nach Fig. 5 erfolgt die Zuführung der Abblasemasse in das Hauptabgasrohr 6 über am Umfang desselben angeordnete Einlaßöffnungen 17 bzw. A3, die von einem Ringkanal 18 umschlossen werden, in den die Ableitungen 13 bzw. 15 münden. Die Einlaßöffnungen 17 können ebenfalls Steuerfunktion haben. Der in Fig. 5 dargestellte Mündungsbereich bezieht sich auf eine Einrichtung nach den Fig. 1 bis 3, wobei jedoch die Ableitungen aus allen drei Ventilen V1, V2 und V3 das Hauptabgasrohr 6 radial durchsetzen und im Inneren des Hauptabgasrohres einen Krümmer von 90° aufweisen, sodaß die Abblasemassen zentral und in Hauptströmungsrichtung einmünden. Die Rückführleitungen 19, 20 und 16 bilden an ihren Mündungen die zu den Abblaseventilen V1, V2 und V3 gehörigen Drosselstellen A1, A2 und A3, deren Querschnitt unveränderlich aber untereinander verschieden sein kann.

**Patentansprüche**

1. Einrichtung zum Abblasen von verdichteter Ladeluft oder von Abgas bei Brennkraftmaschinen mit Abgasturbolader, **dadurch gekennzeichnet**, daß die Einrichtung aus mehreren, vorzugsweise zwei, Auf-/Zu-Abblaseventilen (V1,V2,V3) besteht, denen je eine Drosselstelle (A1,A2,A3) mit unveränderlichem Querschnitt nachgeschaltet ist, die zur Erzielung unterschiedlicher Abblasemassen einzeln ansteuerbar sind.

2. Einrichtung nach Anspruch 1, dadurch gekennzeichnet, daß der von der Ladeluftleitung an der Druckseite des Turbogebläses (8) oder von der Abgasleitung an der Eintrittseite der Abgasturbine (5) abgeleitete, durch die Ventile (V1,V2,V3) gesteuerte Abblasestrom in das austrittsseitige Abgasrohr (6) der Abgasturbine (5) mündet.

3. Einrichtung nach Anspruch 1 oder 2, dadurch gekennzeichnet, daß zwei Auf-/Zu-Abblaseventile (V1,V2) parallel geschaltet sind und in einer Umgehungsleitung (16) zu diesen zwei Auf-/Zu-Abblaseventilen ein drittes Auf-/Zu-Abblaseventil (V3) angeordnet ist, dem ebenfalls eine Drosselstelle (A3) mit unveränderlichem Querschnitt nachgeschaltet ist (Fig. 3).

4. Einrichtung nach Anspruch 3, dadurch gekennzeichnet, daß zumindest die den parallel geschalteten Abblaseventilen (V1,V2) nachgeschalteten Drosselstellen (A1,A2) unterschiedliche Drosselquerschnitte aufweisen.

5. Einrichtung nach einem der Ansprüche 1 bis 4, dadurch gekennzeichnet, daß die Summe der unveränderlichen steuernden Querschnittsflächen der Drosselstellen (A1,A2,A3) kleiner ist als die Hälfte der gesamten lichten Querschnittsfläche des Hauptabgasrohres (6) stromaufwärts der Turbine.

6. Einrichtung nach einem der Ansprüche 1 bis 5, dadurch gekennzeichnet, daß die abgeblasene Gasmasse in das Hauptabgasrohr (6) stromabwärts der Turbine (5) über dort am Umfang des Hauptabgasrohres (6) vorgesehene eine oder verteilt mehrere Eintrittsöffnungen (17 bzw. A3) rückgeführt werden, die massensteuernde Funktion haben können.

7. Einrichtung nach einem der Ansprüche 1 bis 5, dadurch gekennzeichnet, daß zur Rückführung der abgeblasenen Gasmasse in des Hauptabgasrohr (6) Einsatzrohre (16,19,20) mit je einem Auf-/Zu-Abblaseventil (V1,V2,V3) und nachgeschalteter Drosselstelle (A1,A2,A3) unveränderlichen Querschnittes vorgesehen sind, die in das Hauptabgasrohr (6) stromabwärts der Turbine (5) eingesetzt sind.

8. Einrichtung nach Anspruch 7, dadurch gekennzeichnet, daß die Einsatzrohre (16, 19,20) radial in das Hauptabgasrohr (6) eingesetzt und innerhalb des Hauptabgasrohres gekrümmt sind und parallel zur Hauptströmungsrichtung münden.

0263806

Fig.1

Fig. 2

0263806

_Fig. 3_

_Fig. 4_

_Fig. 5_